Europäisches Patentamt

European Patent Office

Office européen des brevets

(19)

(11) EP 0 432 534 B2

(12) **NEUE EUROPÄISCHE PATENTSCHRIFT**

(45) Veröffentlichungstag und Bekanntmachung des Hinweises auf die Entscheidung über den Einspruch:
06.11.1996 Patentblatt 1996/45

(45) Hinweis auf die Patenterteilung:
30.03.1994 Patentblatt 1994/13

(21) Anmeldenummer: 90122291.9

(22) Anmeldetag: 22.11.1990

(51) Int. Cl.$^6$: **B01J 23/648**, B01D 53/94

(54) **Katalysator zur Reinigung der Abgase von Dieselmotoren**

Catalyst for cleaning exhaust gases from Diesel engines

Catalyseur pour purifier les gaz d'échappement de moteurs Diesel

(84) Benannte Vertragsstaaten:
AT CH DE ES FR GB IT LI NL SE

(30) Priorität: 09.12.1989 DE 3940758

(43) Veröffentlichungstag der Anmeldung:
19.06.1991 Patentblatt 1991/25

(73) Patentinhaber: DEGUSSA AG
60311 Frankfurt (DE)

(72) Erfinder:
• Domesle, Rainer, Dr.
W-8755 Alzenau (DE)
• Engler, Bernd, Dr.
W-6450 Hanau 9 (DE)
• Koberstein, Edgar, Dr.
W-8755 Alzenau (DE)
• Völker, Herbert
W-6721 Zeiskam (DE)

(56) Entgegenhaltungen:
EP-A- 0 105 113          EP-A- 0 174 495
EP-A- 0 238 700          EP-A- 0 291 704
EP-A- 0 315 896          DE-A- 2 231 296
DE-A- 3 716 446          JP-A-61 120 640
JP-B-05 078 385          US-A- 4 929 581
US-A- 5 000 929

EP 0 432 534 B2

**Beschreibung**

Die Erfindung betrifft einen ohne zyklische Abreinigung abgeschiedener Partikel kontinuierlich arbeitenden Katalysator zur oxidativen Reinigung der Abgase von Dieselmotoren mit hoher Konversionsleistung für Kohlenwasserstoffe und Kohlenmonoxid in niedrigen Temperaturbereichen mit auf feinteiligem Aluminiumoxid, Titanoxid, Siliciumoxid, Zeolith sowie deren Abmischungen als aktivitätsfördernden Trägerstoff aufgebrachten Vanadinverbindungen und Platingruppenmetallen.

Zur Reinigung von schwefeloxid- und stickoxidhaltigen Dieselabgasen sind bereits Filter auf Basis von feinporigen Keramikmonolithen mit wechselseitig verstopften Kanälen (sog. Wandflußfilter), Schaumkeramik, Drahtgestrickpakete, keramische Rohre, Keramikfaserwickelfilter etc. vorgeschlagen worden. Mit Hilfe dieser Filtrationseinrichtungen können die Dieselrußpartikel aus dem Abgasstrom entfernt werden. Allerdings können die daraus abfiltrierten Partikel nur in wenigen Betriebszuständen, in denen die Abgastemperatur hoch genug ist, durch Verbrennen beseitigt und die Filter auf diese Weise wieder regeneriert werden.

Tritt z. B. durch gemäßigte Fahrweise ein solcher Fahrzustand über längere Fahrdauer nicht auf, steigt der Abgasgegendruck des Filters durch die ständige Ansammlung von Partikeln an, und damit auch der Kraftstoffverbrauch, bis schließlich der Motor zum Stillstand kommt. Somit haben Filtersysteme keine ausreichende Betriebssicherheit für eine allgemeine Verwendung zur Lösung des Problems der Verminderung partikelförmiger Emissionen. Es wurde daher auch vielfach vorgeschlagen, Brennersysteme zur Regeneration einzusetzen oder eine externe Regeneration durch Aufheizen der Filter mit elektrischem Strom, z. B. bei Fahrzeugstillstand vorzunehmen. Zum einen lassen sich Brennersysteme nur bei großen Emissionsquellen wie Lastkraftwagen unschwer unterbringen, zum anderen ist eine externe Regeneration durch Aufheizen des Filters umständlich.

Es ist bereits bekannt, Filtersysteme verschiedener Art, darunter auch die oben beschriebenen Wandflußfilter, mit zündtemperatursenkenden Katalysatorsubstanzen, wie Vanadinpentoxid, Vanadaten, z. B. $AgVO_3$ und Perrhenaten zu beschichten, wobei diese aktiven Substanzen mit einem feinteiligen Trägermaterial dotiert sein können und daneben noch ein Edelmetall, wie Platin, eingebracht durch Imprägnierung, vorliegen kann (DE-A 32 32 729, DE-A 31 41 713 und DE-A 34 07 172 sowie EP-A-0 174 495).

In der EP-A-0 315 896 wird eine Katalysatorformulierung für die Reinigung von Dieselabgasen beschrieben, welche kein Vanadium enthält und auf Filtern als auch auf frei durchstrombaren Honigwaben-Monolithen eingesetzt werden kann. Diese Katalysatorformulierung enthält Palladium und wenigstens ein Oxid eines Elementes der Gruppe Praseodym, Neodym und Samarium, abgeschieden auf einem feinteiligen Trägermaterial.

Mittlerweile hat sich gezeigt, daß bei den zur Zeit überwiegend verwendeten Wandflußfiltern, auch wenn sie mit Katalysatoren der vorstehend erwähnten Art beschichtet sind, die Konversionsleistung für Kohlenwasserstoffe und Kohlenmonoxid, insbesondere bei den Dieselmotor-spezifischen niedrigen Abgastemperaturen, nicht befriedigt. Außerdem birgt die Verwendung von mit Katalysator- und Trägerstoffen beschichteten Wandflußfiltern den Nachteil eines die Motorleistung beeinträchtigenden hohen Abgasgegendruckes, insbesondere bei erhöhter Beladung mit Rußpartikeln. Bemühungen, durch eine erhöhte Katalysatorbeladung diesen Nachteil auszugleichen, waren nicht erfolgreich. Eine Vergrößerung der geometrischen Abmessungen, die zu einer Verminderung des Abgasgegendrucks führen können, lassen die bei den meisten Fahrzeugen beschränkten Platzverhältnisse nicht zu.

Die JP-A-61-120640 beschreibt einen Dieselkatalysator auf einem monolithischen Träger mit frei durchströmbaren Kanälen. Der Katalysator enthält Vanadium-Metall oder eine Vanadium-Verbindung und mindestens ein Platingruppenmetall. Als Trägerstoffe werden reine Oxide und Mischoxide erwähnt.

Aufgabe der Erfindung ist daher, einen Katalysator mit verbesserten Eigenschaften zu entwickeln.

Diese Aufgabe wird gelöst durch einen Katalysator zur oxidativen Reinigung der Abgase von Dieselmotoren, gemäß Anspruch 1.

Die Kalzinierung des imprägnierten Trägerstoffes wird dabei vorzugsweise in einem Wasserstoff enthaltenden Gasstrom durchgeführt.

Die Herstellbarkeit umfaßt also einen großen Spielraum. So kann ein inerter Träger mit dem aktivitätsfördernden oxidischen Trägerstoff nach dem Verfahren der Dispersionsbeschichtung belegt und dann der mit dem Oxidfilm überzogene Träger gleichzeitig oder nacheinander mit den Lösungen der Vorstufen für die aktive Komponente imprägniert werden. Im ersten Fall werden entweder die Lösungen der beiden Vorstufen gemischt oder eine einheitliche Lösung der Vorstufen bereitet.

Der inerte Träger kann aber auch nach dem Dispersionsbeschichtungsverfahren mit einem Film aus bereits mit einer oder beiden Vorstufen der aktiven Komponente beladenem Trägerstoff versehen werden. Diese Beladung erfolgt entweder durch Tränken des Trägerstoffs mit der Lösung oder den Lösungen der jeweiligen Vorstufe(n) vor der Bereitung der Beschichtungssuspension oder durch Eintragen der Vorstufenlösung(en) in die bereits bereitete Beschichtungssuspension, wobei die Vorstufen auf den suspendierten Trägerstoff aufziehen. Wird hierbei nur eine der beiden Vorstufen zusammen mit dem Trägerstoff aufgebracht, so wird die andere durch Nachimprägnieren des beschichteten inerten Trägers eingebracht.

2

Nach jeder Imprägnier- oder Beschichtungsstufe kann das jeweils vorliegende Substrat einer Trocknung und/oder der vorzugsweise unter Wasserstoff erfolgenden Kalzinierung z.B. zwecks Fixierung des Trägerstoffs auf dem inerten Träger oder Fixierung einer oder beider Vorstufen auf dem aktivitätsfördernden Trägerstoff und Bildung der aktiven Komponente(n) aus den Vorstufen erfolgen. Nach Vorliegen beider Vorstufen auf dem Trägerstoff kann man sich auf eine Trocknung beschränken, wenn die Kalzinierung zur Ausbildung der aktiven Komponente der Beaufschlagung mit heißem Motorabgas überlassen werden soll. Ansonsten muß die Kalzinierung im Ofen durchgeführt werden, um die aktive Komponente zu erhalten.

Als Vorstufe für die Vanadindotierung eignen sich alle wasserlöslichen oder teilweise wasserlöslichen Vanadinverbindungen. Beispiele sind Vanadyloxalat, Vanadylformat, $KVO_3$, $NaVO_3$, $NH_4VO_3$, $V_2O_5$.

Als Vorstufe für die Platingruppenmetalle sind alle gebräuchlichen Salze und Komplexsalze derselben geeignet. Beispiele sind $H_2PtCl_6$, $Pt(NH_3)_4(OH)_2$, $Pt(NH_3)_2(NO_2)_2$, $Pt(NH_3)_4(NO_3)_2$, Platinnitrat, $PdCl_2$, $Pd(NO_3)_2$, $Pd(NH_3)_2(NO_2)_2$, $Pd(NH_3)_4(OH)_2$, $H_3RhCl_6$, $Rh(NO_3)_3$, $H_2IrCl_6$.

Die Erfindung ist insbesondere von hohem Wert bei der Abgasreinigung von Dieselmotoren modernerer Konstruktion, bei denen der Partikelanteil von Kohlenstoff (C) gegenüber dem Anteil an extrahierbaren bzw. verdampfbaren (und wieder kondensierbaren) Kohlenwasserstoffen durch motorseitige Maßnahmen bereits deutlich vermindert ist und erlaubt die Erfüllung sehr strenger Grenzwerte für partikelförmige Emissionen.

Überraschenderweise liefert der erfindungsgemäße Katalysator neben einem angemessenen Ausbrand des C-Anteils bisher nicht erreichte Konversionsgrade sowohl für die gasförmigen als auch aerosolförmigen Schadstoffe. Die Schadstoffkonversion erfolgt im Unterschied zu dem bei Wandfiltern beobachteten bei erheblich niedrigeren Abgastemperaturen. Von besonderer Bedeutung ist dieser Effekt im Hinblick auf die geruchsbildenden Aldehyde. Diese können mit Hilfe der erfindungsgemäßen Katalysatoren nun sogar bei relativ niedrigen Abgastemperaturen, wie sie z. B. zeitweise beim Betrieb von Omnibussen im Stadtverkehr auftreten, fast vollständig beseitigt werden. Der nachteilige Einfluß erhöhten Rückstaus und des damit verbundenen erhöhten Kraftstoffverbrauchs entfällt.

Das Phänomen der erhöhten Konversionsleistung bei angemessenem C-Ausbrand könnte unter der Prämisse gleicher Zelldichte damit erklärt werden, daß die die langen Kanäle des erfindungsgemäßen monolith- bzw. wabenförmigen Katalysators passierenden Moleküle bzw. Agglomerate wesentlich häufiger effektiv in Kontakt mit der katalytisch beschichteten Kanaloberfläche gelangen als bei Wandflußfiltern, bei denen jeder Abgasbestandteil zunächst nur einmal durch die katalytisch beschichtete poröse Wand fließt und danach durch die in einen gegebenen Kanal durch die vier Nachbarkanäle eintretenden Stromfäden in die Mitte des Abflußkanals gedrängt, konzentriert und von vergleichbar hohen Wandkontakten ferngehalten wird.

Die Erfindung hat den weiteren Vorteil, daß eine bis 10-fach höhere Zelldichte als bei Wandflußfiltern verwendet werden kann, was mit einer erheblichen Anhebung der katalytisch aktiven Oberfläche verbunden ist.

Es wurde weiterhin gefunden, daß der erfindungsgemäße Katalysator ein besonders gutes Anspringverhalten bezüglich der Kohlenwasserstoff- und Kohlenmonoxidkonvertierung zeigt, wenn er als feinteiligen Trägerstoff für die Vanadin-dotierten bzw. mit einer oxidischen Vanadinverbindung in Berührung stehenden Platingruppenmetalle eine Abmischung von Aluminiumoxid mit Titanoxid, im Gewichtsverhältnis zwischen Aluminiumoxid und Titanoxid 90 : 10 bis 10 : 90 enthält.

Besonders günstig ist, wenn der aktivitätsfördernde Trägerstoff in einer Konzentration von 75 -180, bevorzugt 90 - 150 $g/dm^3$ Katalysatorvolumen gemäß der Erfindung enthält der Katalysator das Vanadin, berechnet als $V_2O_5$, in einer Konzentration von 0,15 - 15 $g/dm^3$ Katalysatorvolumen und die Platingruppenmetalle in einer Konzentration von 0,1 - 7 $g/dm^3$ Katalysatorvolumen vorliegen.

Der Gehalt an Vanadin orientiert sich dabei in begrenztem Maße an dem Gehalt an feinteiligem Trägerstoff: Je mehr von letzterem vorliegt, desto mehr Vanadin wird eingebracht, um die Oxidation von im Abgas stets enthaltenem $SO_2$ zu mindern.

Im Gegensatz zu Wandfiltern liegt die obere Beladungskapazität des inerten offenzelligen Trägers für aktivitätsfördernden Trägerstoff weit höher als bei Dieselfiltern, bei denen eine höhere Beladung zu unpraktikablem Anstieg des Durchflußwiderstandes führt. Dieser erfindungsgemäß erhältliche technische Vorteil äußert sich in verbesserten Schadstoffumsätzen bei niedrigeren Temperaturen.

Bevorzugt beträgt die Zelldichte des monolithischen bzw. wabenförmigen inerten Trägers 5 bis 100, vorzugsweise 20 - 100, insbesondere 30 - 80 Zellen/$cm^2$.

Ein weiterer bedeutender Vorteil der erfindungsgemäßen Katalysatoren stellt die Unterdrückung der Emission von $NO_2$ dar. Im Dieselmotorabgas ist diese Komponente zwar nur in untergeordnetem Maße vorhanden, jedoch bilden sich beim Überleiten über herkömmliche Platingruppenmetall-haltige Katalysatoren zum Zwecke der Oxidation von CO und Kohlenwasserstoffen aus NO und dem darin stets im Überschuß vorhandenen Luftsauerstoff bedeutsame Mengen an Stickstoffdioxid. Diese Nebenreaktion ist in höchstem Maße unerwünscht, da die Toxizität von $NO_2$ diejenige von NO bei weitem übertrifft, Die erfindungsgemäßen Katalysatorkompositionen aus feinteiligen Trägerstoffen und Vanadin-dotierten Platingruppenmetallen auf einem monolithischen inerten Träger unterdrücken dagegen überraschenderweise die Bildung von $NO_2$ in erheblichem Maße, ohne die gewünschten Oxidationsreaktionen nachteilig zu beeinflussen.

EP 0 432 534 B2

Eine besonders wirksame Hemmung der Weiteroxidation von Stickstoffmonoxid kann erzielt werden, wenn als Platingruppenmetall Platin und/oder Palladium verwendet wird.

Das erfindungsgemäß beherrschbare Problem der Weiteroxidation von NO tritt gravierend und praktisch nur bei offenzelligen Monolith- bzw. Wabenkatalysatoren auf, weil hier im Vergleich zu katalytisch beschichteten Dieselwandfiltern die Schadstoffumsätze allgemein wesentlich höher liegen bzw. vergleichbare Umsätze schon bei tieferen Temperaturen erfolgen.

Für eine erhöhte Dauerstandsfestigkeit haben sich als Platingruppenmetalle das Platin und für eine nur geringe Weiteroxidation von NO (und auch von $SO_2$) das Palladium als besonders günstig erwiesen. Der Platinanteil sollte über 50 Gew.%, bezogen auf den Gesamtgehalt an Platingruppenmetall, liegen, wenn kleinere Platingruppenmetallkonzentrationen vorgesehen sind (z. B. 0,7 bis 1,8 g/$dm^3$).

Da Palladium die Schadstoffe nicht so wirksam konvertiert wie Platin in gleichen Gewichtsmengen, ist es angezeigt, bei alleiniger Verwendung von Palladium höhere Konzentrationen aus dem beanspruchten Bereich zu wählen. Dies ist unter ökonomischen Gesichtspunkten durchaus vertretbar, da Palladium deutliche Kostenvorteile gegenüber Platin besitzt.

Kombinationen von Platin und Iridium oder Rhodium ergeben ebenfalls gute Wirkungen: Sie sind zwar kostspieliger aber in bestimmten Fällen vorzuziehen, z.B. bei hohem Stickoxidanteil im Abgas.

Die im Patentanspruch angeführten Abmischungen sind besonders wirksam, jedoch können diesen noch folgende Trägerstoffe allein oder in Abmischung zugesetzt werden: $SiO_2$, Zeolithe, MgO, $CeO_2$, $GeO_2$, $SnO_2$, $ZrO_2$, $HfO_2$, $ThO_2$, $Nb_2O_5$, $WO_3$, $MoO_3$, Magnesiumsilikat, Aluminiumsilikat und Magnesiumtitanat.

Bevorzugt sind davon die sauren Oxide, da sie etwa gebildetes $SO_3$ weniger speichern als basische Oxide; letztere neigen zur Beladung mit $SO_3$, was mit Aktivitätsverminderung einhergeht und zusätzlich den Nachteil birgt, beim Auftreten von Temperaturspitzen Schwefelsäurenebel (aus $SO_3$ + Wasserdampf) zu emittieren.

Die erfindungsgemäßen Katalysatoren zeichnen sich also insbesondere auch dadurch aus, daß sie trotz der besprochenen hohen Konversionsleistung für partikelförmige und flüchtige Schadstoffe (zu letzteren zählen auch die geruchsintensiven Aldehyde) sehr wenig Schwefel in der Oxidationsstufe + 6 emittieren.

Besonders günstig ist dafür, wenn als Trägerstoff eine Abmischung von Aluminiumoxid und Titandioxid, gegebenenfalls in Abmischung mit einem anderen sauren Oxid, im Gewichtsverhältnis 10 : 90 bis 70 : 30, vorzugsweise 20 : 80 bis 60 : 40, verwendet wird.

Damit tritt der schon gemäß SAE-Paper 850013 an Dieselfiltern gemäß der DE-OS 32 32 729 beobachtete vorteilhafte Effekt der Minderung der $SO_3$-Emission auch bei den erfindungsgemäßen Katalysatoren auf.

Die Erfindung wird nachfolgend anhand von Beispielen weiter erläutert.

Vergleichs Beispiel 1

Ein zylindrischer, offenzelliger Wabenkörper aus Cordierit mit 114 mm Durchmesser, 115 mm Länge und einer Zelldichte von 62 Zellen/$cm^2$ wird durch Eintauchen in eine 30 Gew.%ige Suspension mit $Al_2O_3$ belegt. Nach Trocknung bei 100° C und zweistündiger Temperung bei 400° C liegen 290 g $Al_2O_3$ auf dem Träger vor. Der beschichtete Monolith wird anschließend mit einer Lösung von $Pt(NH_3)_4(OH)_2$, die 3,27 g Pt enthält, imprägniert, bei 120° C getrocknet und 2 h bei 300° C im Formiergasstrom ($N_2 : H_2$ = 95 : 5) reduziert. Abschließend wird die Katalysatorvorstufe mit Vanadyloxalatlösung imprägniert, die 9,3 g $V_2O_5$ enthält,und 2 h bei 300° C unter Zersetzung der Vanadinverbindung getrocknet.

Vergleichsbeispiel 2

Ein zylindrischer Dieselpartikelfilter mit wechselseitig verstopften Zellen (Hersteller Corning Glas) mit 144 mm Durchmesser und 115 mm Länge, einer Zelldichte von 16 Zellen/$in^2$ und einer Zellwandstärke von 0,64 mm wird wie in DE-OS 32 32 729 beschrieben, von einer Stirnseite her mit Vanadyloxalatlösung imprägniert, die 45 g $V_2O_5$ enthält. Nach der Trocknung bei 150° C wird der beschichtete Monolith 1 h bei 700° C getempert, wobei sich Vanadyloxalat zersetzt. Danach erfolgt eine Beschichtung von der anderen Stirnseite her mit einer dünnflüssigen $Al_2O_3$-Suspension, die 45 g $Al_2O_3$ enthält, und eine Trocknung bei 300° C. Abschließend wird der Filterkörper von derselben Seite her mit einer Lösung von $Pt(NH_3)_4(OH)_2$ übergossen, die 3,27 g Pt enthält, getrocknet und 2 h bei 300° C im Formiergasstrom ($N_2 : H_2$ = 95 : 5) reduziert.

Katalysatortertung

Die Dieselabgasreinigungssysteme gemäß Beispiel 1 und 2 wurden am stationären Motorprüfstand getestet, der mit einem 4-Zylinder-Dieselmotor (55 KW, 1,6 l Hubraum) und einer Wasserwirbelstrombremse Typ 230 der Fa. Schenck AG ausgerüstet war. Der Testkraftstoff enthielt 0,2 % Schwefel.

4

Zur Abgasanalytik wurden folgende Geräte eingesetzt:

| | | |
|---|---|---|
| $O_2$-Messung | Oxymat | Siemens AG |
| HC-Messung | FID | Pierburg Messtechnik |
| NO, $NO_x$-Messung | Model 951 A | Beckman Instruments |
| CO-Messung | Binos | Leybold AG |
| $CO_2$-Messung | Binos | Leybold AG |
| $SO_2$-Messung | Binos | Leybold AG |

Der Aktivitätstest erfolgte am Motor bei 2 Leistungsstufen, wobei die Konvertierungsgrade von HC, CO und $SO_2$ zu $SO_3$ nach der Formel:

$$K = \frac{\text{Einlaßkonzentration - Auslaßkonzentration}}{\text{Einlaßkonzentration}} \times 100 = \%$$

ermittelt wurde.

Zur Regelung der Abgastemperatur wurde im Abgasrohr ein Kühler installiert, der eine kontinuierliche Steigerung der Temperatur am Filter- bzw, Katalysatoreintritt während des Tests in Verbindung mit Drehzahl und Laständerung des Motors ermöglichte.

Motoreinstellungen:

| Stufe | Drehzahl 1/Min. | Last (Newton) | Abgastemperatur °C |
|---|---|---|---|
| 1 | 2100 | 71 | 150 - 250 |
| 2 | 3000 | 76 | 250 - 450 |

Nach den Tests im frischen Zustand wurden Filter und Katalysator am Motor ohne Kühlsystem 100 h mit folgender Motoreinstellung gealtert:

| Drehzahl 1/Min. | Last (Newton) | Abgastemperatur °C |
|---|---|---|
| 2900 | 76 | 550 |

Im frischen und gealterten Zustand wurden CO, HC und $SO_2$-Konvertierungen über der Abgaseintrittstemperatur für die beiden getesteten Systeme mit folgenden Ergebnissen ermittelt:

|  | $T_{50\%}$ | |
|---|---|---|
|  | CO | HC |
| Frischzustand | | |
| Vergleichs Beispiel 1 | 203 | 210 |
| Vergleichsbeispiel 2 | 425 | 262 |
| 100 h Motoralterung | | |
| Vergleichs Beispiel 1 | 208 | 225 |
| Vergleichsbeispiel 2 | - | 277 |

Eine 50 %ige Konvertierung für CO wurde nach Motoralterung im untersuchten Temperaturbereich nicht mehr erreicht.

Weiterhin wurden die Konvertierungen bei 250° C bestimmt, was einer mittleren Abgastemperatur bei Dieselmotoren im Kurzstreckenbetrieb entspricht.

| Frischzustand | | | |
|---|---|---|---|
| Vergleichs Beispiel 1 | CO = 92 | HC = 63 | $SO_2$ = 19 |
| Vergleichsbeispiel 2 | CO = 17 | HC = 38 | $SO_2$ = 4 |
| 100 h Alterung | | | |
| Vergleichsbeispiel 1 | CO = 82 | HC = 66 | $SO_2$ = 12 |
| Vergleichsbeispiel 2 | CO = 10 | HC = 32 | $SO_2$ = 2 |

Im Betriebszustand bei 520° C Abgastemperatur und 70N Last wurden folgende Werte für den Druckverlust für die Abgasreinigungssysteme ermittelt:

|  | Frischzustand | Motorbetrieb (30 Min. 33 N 2900 U/min) |
|---|---|---|
| Vergleichs Beisp. 1 | 0,9 kPa | 0,9 kPa |
| V-Beisp. 2 | 4,2 kPa | 20 kPa |

Bei Vergleich der Testergebnisse zeigt das Abgasreinigungssystem nach Vergleichs Beispiel 1 gegenüber Vergleichsbeispiel 2 nach Stand der Technik folgende Vorteile:

Im kritischen Abgastemperaturbereich zwischen 150 und 250° C sind die Konvertierungsgrade für CO und HC wesentlich höher, besonders nach Motoralterung,

Der Durchflußwiderstand ist beim wabenförmigen Katalysator (Vergleichs Beispiel 1) gegenüber dem unbeladenen und besonders dem beladenen Filter (Vergleichsbeispiel 2) deutlich geringer.

Vergleichs Beispiele 3 - 6

Ein keramischer Wabenkörper mit 102 mm Durchmesser, 114 mm Länge und einer Zelldichte von 62 Zellen/cm$^2$ wird durch Tauchen in eine wäßrige Suspension aus $\gamma$-$Al_2O_3$ (spezifische Oberfläche 160 m$^2$/g) und Ausblasen überschüssigen Beschichtungsmaterials aus den offenen Kanälen mit einem $Al_2O_3$-Überzug versehen. Nach dem Trocknen bei 120° C und Tempern bei 700° C an Luft wird der beschichtete Formkörper mit $H_2PtCl_6$ imprägniert, erneut bei 120° C getrocknet und 2 h bei 500° C im Formiergasstrom ($N_2$ : $H_2$ = 95 : 5) reduziert. Anschließend wird der Katalysator durch Imprägnierung mit einer wäßrigen Lösung von Vanadyloxalat, Trocknung bei 120° C und Zersetzung des Vanadylsalzes bei 350° C an Luft fertiggestellt. Bezüglich der Katalysatorzusammensetzungen siehe Tabelle 1.

Vergleichsbeispiel 23

Ein Katalysator nach Beispiel 6 wird hergestellt, jedoch nicht mit Vanadyloxalat imprägniert.

Vergleichs Beispiele 7 und 8

Ein Katalysator wird hergestellt nach Beispiel 3 mit dem Unterschied, daß als Edelmetallkomponente $Pt(NH_3)_4(OH)_2$ eingesetzt wird und statt der Reduktion eine 2-stündige Temperung an Luft bei 450°C erfolgt.

Vergleichs Beispiel 9

Ein Trägerkörper (Durchmesser 100 mm, Länge 118 mm, 62 Zellen/cm$^2$) aus hochtemperaturbeständigem Stahl, der Fe, Cr und Al als wesentliche Legierungsbestandteile aufweist, wird mit einer wäßrigen Suspension aus $\gamma$-$Al_2O_3$ (spezifische Oberfläche 100 m$^2$/g und Vanadyloxalat belegt, getrocknet und bei 400° C an Luft kalziniert. Anschließend wird die Katalysatorvorstufe mit $Pt(NH_3)_4(NO_3)_2$ imprägniert, bei 120° C getrocknet und 1 h im Formiergasstrom ($N_2$ : $H_2$ = 95 : 5) bei 500° C reduziert.

Vergleichs Beispiele 10 und 11

Ein keramischer Wabenkörper wie in Beispiel 3 beschrieben wird mit einer wäßrigen Suspension aus $\gamma$-$Al_2O_3$ mit einer spezifischen Oberfläche von 120 m$^2$/g beschichtet. Nach der Trocknung bei 105° C und 3-stündiger Temperung bei 550° C wird der Formkörper mit einer Lösung von Vanadyloxalat imprägniert, bei 120° C getrocknet und 2 h bei 350° C an Luft kalziniert. Anschließend erfolgt eine Imprägnierung mit $H_2PtCl_6$ und $Pd(NO_3)_2$, eine Trocknung bei 120° C und eine Reduktion bei 450° C im Formiergasstrom.

Vergleichsbeispiel 24

Ein Katalysator nach Beispiel 10 wird hergestellt, ohne zur Suspension von $\gamma$-$Al_2O_3$ Vanadyloxalat zuzusetzen.

Vergleichs Beispiel 12

Ein Katalysator nach Beispiel 10, wird ausschließlich mit Pd als Edelmetallkomponente (eingebracht als $Pd(NO_3)_2$) hergestellt.

Vergleichs Beispiel 13

Ein Katalysator nach Beispiel 10 wird unter Verwendung der Edelmetalle Pd (eingesetzt als $PdCl_2$) und Ir (eingesetzt als $H_2IrCl_6$) im Verhältnis 5 : 1 hergestellt.

Vergleichs Beispiel 14

Ein keramischer Wabenkörper wie in Beispiel 3 beschrieben wird mit einer wäßrigen Suspension aus $\gamma$-$Al_2O_3$ (140 m$^2$/g), $H_2PtCl_6$, $RhCl_3$ und Vanadyloxalat beschichtet, bei 120° C getrocknet und 2 h im Formiergasstrom bei 550° C reduziert.

Vergleichs Beispiel 15

Ein Katalysator wird unter Verwendung der Edelmetallsalze $H_2PtCl_6$ und $H_2IrCl_6$ nach Beispiel 10 präpariert.

Beispiele 16 - 19

Ein keramischer Wabenkörper wie in Beispiel 3 beschrieben wird mit einer wäßrigen Suspension von $\gamma$-$Al_2O_3$ (180 m$^2$/g) und $TiO_2$ (Degussa P 25. Rutil/Anatas-Gemisch, 51 m$^2$/g spez. Oberfläche) beschichtet. Nach der Trocknung bei 120° C und 2-stündiger Temperung bei 450° C wurde der belegte Monolith mit $Pt(NH_3)_4(OH)_2$ imprägniert. Im Anschluß an die Trocknung bei 150° C erfolgte eine Temperung an Luft bei 300° C. Nach der Belegung mit Vanadyloxalat und Trocknung bei 105° C sowie der Vanadylsalzzersetzung bei 400° C wurde die Katalysatorvorstufe 2 h bei 500° C im Formiergasstrom reduziert.

Vergleichs Beispiel 20

Ein Katalysator nach Beispiel 12 wird mit einer wäßrigen Suspension hergestellt, die $\gamma$-$Al_2O_3$ (120 $m^2$/g) und $SiO_2$ (Degussa FK 320, 170 $m^2$/g spez. Oberfläche) enthält.

Vergleichs Beispiel 21

Ein Katalysator nach Beispiel 6 wird mit einer wäßrigen Suspension hergestellt, die $\gamma$-$Al_2O_3$ (140 $m^2$/g spez. Oberfläche) und H-Mordenit enthält.

Vergleichs Beispiel 22

Ein Katalysator nach Beispiel 6 wird anstelle von Vanadyloxalat mit $KVO_3$-Lösung nachimprägniert.

Tabelle 1

| Katalysatorzusammensetzung der Beispiele 3 - 24 | | | | | |
|---|---|---|---|---|---|
| Beispiel | Edelmetall | Edelmetallgehalt g/dm$^3$ | Trägerstoff g/dm$^3$ | | |
| | | | $Al_2O_3$ | weitere Oxide | $V_2O_5$ |
| 3 (Vergl.) | Pt | 0,35 | 60 | - | 1 |
| 4 (Vergl.) | Pt | 0,35 | 200 | - | 10 |
| 5 (Vergl.) | Pt | 1 | 60 | - | 5 |
| 6 (Vergl.) | Pt | 1,75 | 140 | - | 5 |
| 23 (Vergl.) | Pt | 1,75 | 140 | - | - |
| 7 (Vergl.) | Pt | 2,83 | 60 | - | 1 |
| 8 (Vergl.) | Pt | 2,83 | 200 | - | 10 |
| 9 (Vergl.) | Pt | 1,75 | 140 | - | 5 |
| 10 (Vergl.) | Pt:Pd=2:1 | 1,5 | 140 | - | 5 |
| 24 (Vergl.) | Pt:Pd=2:1 | 1,5 | 140 | - | - |
| 11 (Vergl.) | Pt:Pd=1:3 | 1,5 | 140 | - | 5 |
| 12 (Vergl.) | Pd | 1,5 | 140 | - | 5 |
| 13 (Vergl.) | Pd:Ir=5:1 | 1,5 | 140 | - | 5 |
| 14 (Vergl.) | Pt:Rh=5:1 | 1,6 | 140 | - | 5 |
| 15 (Vergl.) | Pt:Ir=5:1 | 1,75 | 140 | - | 5 |
| 16 | Pt | 1,75 | 126 | 14 $TiO_2$ | 5 |
| 17 | Pt | 1,75 | 112 | 28 $TiO_2$ | 5 |
| 18 | Pt | 1,75 | 84 | 56 $TiO_2$ | 5 |
| 19 | Pt | 1,75 | 28 | 112 $TiO_2$ | 5 |
| 20 (Vergleichs) | Pd | 1,5 | 60 | 80 $SiO_2$ | 5 |
| 21 (Vergleichs) | Pt | 1,75 | 70 | 70 Mordenit | 5 |
| 22 (Vergleichs) | Pt | 1,75 | 140 | - | 5 (aus $KVO_3$) |

Tabelle 2

Konvertierung der Katalysatoren aus Beispiel 3 - 24 im Frischzustand

| Beispiel | $T_{50\%}$ [°C] | | Konvertierung 350°C | | $SO_2$ [%] | | $NO^*$ |
|---|---|---|---|---|---|---|---|
| | CO | HC | CO | HC | 350°C | 450°C | 350°C |
| 3 (Vergl.) | 239 | 245 | 92 | 69 | 2 | 24 | n.b. |
| 4 ♩ | 250 | 255 | 91 | 68 | 4 | 7 | n.b. |
| 5 ♩ | 236 | 240 | 91 | 75 | 4 | 25 | n.b. |
| 6 ♩ | 225 | 227 | 91 | 79 | 10 | 20 | 1 |
| 23 (Vergl.) | 223 | 227 | 92 | 78 | 60 | 68 | 8 |
| 7 ♩ | 214 | 218 | 91 | 84 | 28 | 48 | n.b. |
| 8 ♩ | 213 | 222 | 91 | 84 | 16 | 33 | n.b. |
| 9 ♩ | 230 | 232 | 91 | 78 | 9 | 19 | n.b. |
| 10 ♩ | 238 | 242 | 90 | 71 | 15 | 28 | 2 |
| 24 (Vergl.) | 235 | 245 | 89 | 70 | 55 | 63 | 6 |
| 11 ♩ | 242 | 248 | 88 | 68 | 16 | 24 | 1 |
| 12 ♩ | 260 | 275 | 85 | 67 | 8 | 17 | 0 |
| 13 ♩ | 251 | 257 | 87 | 69 | 12 | 12 | 0 |
| 14 ♩ | 240 | 244 | 91 | 72 | 13 | 22 | 1 |
| 15 ♩ | 229 | 240 | 90 | 80 | 11 | 22 | 1 |
| 16 | 227 | 233 | 91 | 81 | 14 | 25 | 2 |
| 17 | 222 | 224 | 91 | 82 | 13 | 18 | 2 |
| 18 | 216 | 218 | 92 | 83 | 11 | 15 | 1 |
| 19 | 210 | 212 | 91 | 81 | 7 | 9 | 1 |
| 20 (Vergl.) | 255 | 272 | 85 | 69 | 7 | 19 | 0 |
| 21 ♩ | 230 | 233 | 90 | 74 | 8 | 22 | 1 |
| 22 ♩ | 232 | 236 | 89 | 74 | 10 | 24 | 2 |

*) Die Bestimmung der Konvertierungsraten $NO + 1/2O_2 \longrightarrow NO_2$ erfolgte indirekt über die Messung der $NO_x$- und NO-Konzentration im Abgasstrom nach Katalysator durch Differenzbildung:

$$\frac{c_{NOx} - c_{NO}}{c_{NOx}} \cdot 100 = x \% \ NO$$

9

Tabelle 3

| Beispiel | $CO_{50\%}$ °C | $HC_{50\%}$ °C | $CO_{max}$ % | $HC_{max}$ % | $SO_2$ [%] | |
|---|---|---|---|---|---|---|
| Konvertierung einiger Katalysatoren nach 100 h Motordauertest bei 550° C Abgastemperatur | | | | | | |
| | | | | | 350°C | 450°C |
| 6 (Vergl.) | 229 | 230 | 92 | 76 | 2 | 16 |
| 23 (Vergl.) | 225 | 228 | 91 | 75 | 58 | 63 |
| 10 (Vergl.) | 240 | 255 | 85 | 71 | 0 | 11 |
| 24 (Vergl.) | 245 | 260 | 82 | 70 | 32 | 60 |
| 11 (Vergl.) | 275 | 302 | 55 | 43 | 3 | 17 |
| 12 (Vergl.) | 280 | 305 | 53 | 40 | 7 | 20 |
| 14 (Vergl.) | 233 | 239 | 91 | 74 | 1 | 16 |
| 16 | 234 | 240 | 90 | 76 | 0 | 13 |
| 17 | 236 | 242 | 91 | 77 | 0 | 11 |
| 18 | 233 | 240 | 91 | 78 | 0 | 5 |
| 19 | 235 | 241 | 91 | 76 | 0 | 0 |

**Patentansprüche**

1. Katalysator zur oxidativen Reinigung der Abgase von Dieselmotoren, erhältlich durch gleichzeitiges oder in beliebiger Reihenfolge nacheinander erfolgendes Imprägnieren eines feinteiligen aktivitätsfördernden Trägerstoffes mit der Lösung einer Platingruppenmetallverbindung und der Lösung einer Vanadinverbindung, Trocknen und Calcinieren bei Temperaturen von 200°C bis 550°C, wobei das Vanadin, berechnet als $V_2O_5$, in einer Konzentration von 0,15 bis 15 g/dm$^3$ Katalysatorvolumen und das Platingruppenmetall in einer Konzentration von 0,1 bis 7 g/dm$^3$ Katalysatorvolumen vorliegen und der aktivitätsfördernde Trägerstoff auf den frei durchströmbaren Kanälen eines monolithischen oder wabenförmigen inerten Trägers aus Keramik oder Metall angeordnet ist und in einer Konzentration von 75 bis 250 g/dm$^3$ Katalysatorvolumen vorliegt und vor oder nach seinem Aufbringen auf den inerten Träger mit jeweils mindestens einer der beiden Lösungen imprägniert wird,
   **dadurch gekennzeichnet**,
   daß der aktivitätsfördernde Trägerstoff eine Abmischung von Aluminiumoxid mit Titanoxid im Gewichtsverhältnis zwischen Aluminiumoxid und Titanoxid von 9 : 1 bis 1 : 9 enthält und die Platingruppenmetallverbindung aus Platin, Palladium, Rhodium und/oder Iridium besteht.

2. Katalysator nach Anspruch 1,
   **dadurch gekennzeichnet**,
   daß das Calcinieren in einem Wasserstoff enthaltenden Gasstrom erfolgt.

3. Katalysator nach einem der Ansprüche 1 bis 2,
   **dadurch gekennzeichnet**,
   daß der aktivitätsfördernde Trägerstoff in einer Konzentration von 75 - 180, bevorzugt 90 - 150 g/dm$^3$ Katalysatorvolumen vorliegt.

4. Katalysator nach einem der Ansprüche 1 bis 3,
   **dadurch gekennzeichnet**,
   daß als Platingruppenmetall Platin und/oder Palladium vorliegt.

**Claims**

1. A catalyst for the oxidative purification of the exhaust gases of diesel engines, obtainable by simultaneously or in any sequence successively impregnating a finely divided activating support material with the solution of a platinum-group metal compound and the solution of a vanadium compound, drying and calcining at temperatures of 200 °C to 550 °C, wherein the vanadium, calculated as $V_2O_5$, is present at a concentration of 0.15 to 15 g/dm$^3$ catalyst volume and the platinum-group metal at a concentration of 0.1 to 7 g/dm$^3$ catalyst volume, and the activating support material is disposed on the channels, through which free flow is possible, of a monolithic or honeycomb inert support of ceramic or metal and is present at a concentration of 75 to 250 g/dm$^3$ catalyst volume and before or after its application to the inert support is impregnated with at least one of the two solutions at a time, characterised in that the activating support material contains a mixture of aluminium oxide with titanium oxide in the weight ratio between aluminium oxide and titanium oxide of 9:1 to 1:9 and the platinum-group metal compound comprises platinum, palladium, rhodium and/or iridium.

2. A catalyst according to Claim 1, characterised in that the calcination is carried out in a gas stream containing hydrogen.

3. A catalyst according to one of Claims 1 to 2, characterised in that the activating support material is present at a concentration of 75-180, preferably 90-150 g/dm$^3$ catalyst volume.

4. A catalyst according to one of Claims 1 to 3, characterised in that platinum and/or palladium are present as the platinum-group metal.

**Revendications**

1. Catalyseur pour la purification par voie d'oxydation des gaz d'échappement de moteurs Diesel, que l'on peut obtenir par imprégnation simultanée ou exécutée à tour de rôle dans un ordre quelconque d'une matière support stimulant l'activité finement divisée avec la solution d'un composé métallique du groupe platine et la solution d'un composé de vanadium, par séchage et calcination à des températures de 200°C à 550°C, tandis que le vanadium, calculé comme V2O5 est présent en une concentration de 0,15 à 15 g/dm$^3$ de volume de catalyseur et le métal du groupe platine en une concentration de 0,1 à 7 g/dm$^3$ de volume de catalyseur, et la matière support stimulant l'activité est placée sur les canaux pouvant être parcourus librement d'un support inerte monolithique ou en nid d'abeilles en céramique ou en métal et est présente en une concentration de 75 à 250 g/dm$^3$ de volume de catalyseur et est imprégnée avant ou après son application sur le support inerte avec au moins une des deux solutions, caractérisé en ce que : la matière support stimulant l'activité contient un mélange d'oxyde d'aluminium avec de l'oxyde de titane dans un rapport de poids entre l'oxyde d'aluminium et l'oxyde de titane de 9 : 1 à 1 : 9, et le composé métallique du groupe platine est constitué de platine, de palladium, de rhodium et/ou d'iridium.

2. Catalyseur selon la revendication 1, caractérisé en ce que la calcination a lieu dans un courant gazeux contenant de l'hydrogène.

3. Catalyseur selon une des revendications 1 à 2, caractérisé en ce que la matière support stimulant l'activité est présente en une concentration de 75 à 180, de préférence de 90 à 150 g/dm$^3$ de volume de catalyseur.

4. Catalyseur selon une des revendications 1 à 3, caractérisé en ce que comme métal du groupe platine, est présent le platine et ou le palladium.